# EUROPÄISCHE PATENTSCHRIFT

(11) **EP 3 062 994 B1**
(45) Veröffentlichungstag und Bekanntmachung des Hinweises auf die Patenterteilung: **17.02.2021**
(21) Anmeldenummer: 14789233.5
(22) Anmeldetag: 22.10.2014
(51) Int. Cl.: B29C 70/52, F16S 3/00, E04C 3/29

(54) **KONTINUIERLICHE HERSTELLUNG VON PROFILEN IN SANDWICHBAUWEISE MIT SCHAUMKERNEN UND HARTSCHAUM GEFÜLLTES PROFIL**
CONTINUOUS PRODUCTION OF PROFILES IN A SANDWICH STRUCTURE WITH FOAM CORES AND PROFILE WITH HARD-FOAM CORE
FABRICATION CONTINUE DE PROFILS À STRUCTURE EN SANDWICH AVEC DES NOYAUX EN MOUSSE ET PROFIL AVEC UN NOYAU EN MOUSSE DURE

(30) Priorität: 30.10.2013 EP 13190866
(43) Veröffentlichungstag der Anmeldung: 07.09.2016
(73) Patentinhaber: Evonik Operations GmbH, 45128 Essen (DE)
(72) Erfinder: BÜHLER, Sebastian, 79104 Freiburg (DE); SEMLITSCH, Karl-Heinz, A-8680 Mürzzuschlag (AT); KRISHNAMOORTHY, Sivakumara K., 64319 Pfungstadt (DE)
(74) Vertreter: Evonik Patent Association
(86) Internationale Anmeldenummer: PCT/EP2014/072640
(87) Internationale Veröffentlichungsnummer: WO 2015/062933

(56) Entgegenhaltungen:
- CN-A- 103 244 753
- DE-A1- 4 416 796
- DE-U1- 29 913 877
- GB-A- 898 597
- US-A- 3 383 266
- "lighter Planes with Rohacell", Plastics on line Magazine PLASTIKS, 2007, XP002722675, Gefunden im Internet: URL:http://www.plastics.ru/index.php?lang= en&view=journal&category_id=91&year=2007&e ntry_id=626 [gefunden am 2014-04-02]

## Beschreibung

### Gebiet der Erfindung

Die vorliegende Erfindung betrifft ein neuartiges Verfahren zur Herstellung von neuen faserverstärkten Profilwerkstoffen, die mit einem Hartschaumkern, insbesondere einem PMI-Schaumkern gefüllt sind. Insbesondere betrifft die vorliegende Erfindung ein neuartiges Verfahren, welches in zwei Varianten, einem Pul-Press- und einem Pul-Shape-Verfahren, durchführbar ist. Dabei wird mittels in einem Verfahrensschritt ein komplexer faserverstärkter Profilwerkstoff kontinuierlich hergestellt und gleichzeitig mit dem Hartschaumkern gefüllt. Weiterhin wird im gleichen Verfahrensschritt eine sehr gute Anbindung des Hartschaumkerns an das faserverstärkte Profilmaterial gewährleistet.

### Stand der Technik

Nach Stand der Technik können mit PMI-Schäumen gefüllte Hohlkörper mittels des so genannten In-Mold-Verfahren hergestellt werden. Dabei werden die fertigen Hohlkörper mit einem Granulat gefüllt, welches anschließend thermisch aufgeschäumt wird und dabei vernetzt. Nachteil dieses Verfahrens ist, dass man mehrere Verfahrensschritte, nämlich die Hohlkörperherstellung, das Füllen mit dem Granulat und das Aufschäumen benötigt. Ein weiterer Nachteil ist, dass aufgrund der relativ hohen Schäumungstemperaturen des PMI thermisch instabile Materialien, wie ein Composite aus Kohlefasern und einem Epoxidharz, nicht verwendet werden können. Darüber hinaus ist die beim Aufschäumen bewirkte Anbindung zwischen Schaum und Deckschicht nur schwach ausgebildet. Ein solches In-Mold-Verfahren ist beispielsweise in WO 2012/013393 beschrieben. PUR-Schaumfüllungen werden alternativ nach Stand der Technik als Flüssigkeit in den Hohlraum injiziert und anschließend aufgeschäumt und ausgehärtet. Dieses Verfahren bringt jedoch zum einen ähnliche Nachteile wie das beschriebene Verfahren zur PMI-Schaumfüllung mit sich und ist darüber hinaus nicht auf PMI übertragbar.

Alternativ können offene Schalenteile mit einem zugeschnittenen Schaumkern ausgefüllt werden und anschließend ein zweites Schalenteil unter Bildung des Hohlprofils mit dem ersten Schalenteil verklebt oder verschweißt werden. Zur besseren Anbindung des Schaumkerns, kann an den Grenzflächen darüber hinaus eine Klebeschicht aufgetragen werden. Nachteile dieses Verfahrens sind, dass sehr viele zeitaufwendige Prozessschritte benötigt werden, dass das Endprodukt Fügestellen aufweist, und dass bei der Herstellung des Schaumkerns je nach Form desselben eine große Menge Verschnittmaterial anfallen kann.

In einer Variante, wie sie in WO 2012/052219 beschrieben ist, wird der Schaumkern zusammen mit dem Gewebematerial - wie z.B. Kohlefasern - in einer Form eingelegt und das Harz - z.B. Epoxidharz - in diese Form eingespritzt und ausgehärtet. Zwar werden hier Fügestellen vermieden, dafür weist dieses Verfahren in Bezug auf Verschnitt, Prozessgeschwindigkeit und Aufwendigkeit die gleichen Nachteile wie das zuvor beschriebene Verfahren auf.

Das Pultrusionsverfahren, das auch unter dem deutschen Namen Strangziehverfahren bekannt ist, ist ein etabliertes Verfahren, das auf erste Entwicklungen Anfang der 1950er Jahre zurückgeht. Das Pultrusionsverfahren wird dazu verwendet, kontinuierlich faserverstärkte Kunststoffprofile, wie z.B. auch Hohlprofile, insbesondere Rohre, herzustellen. Ursprünglich wurden dabei mehrere Glasfasern (Glasrovings) mit einem Polyester- oder einem Epoxidharz imprägniert, anschließend über ein oder mehrere Formgebungswerkzeuge in die endgültige Form zusammengeführt. Abschließend wird das Harz ausgehärtet und das kontinuierlich produzierte Profil zu einzelnen Werkstücken zersägt.

Bei dem Pultrusionsverfahren handelt es sich insbesondere um ein Verfahren, bei dem in einem ersten Verfahrensschritt mehrere Fasern oder Rovings mit einem Harz getränkt werden. Man unterscheidet dabei zwischen einem so genannten offenen Pultrusionsverfahren, bei dem diese Harztränkung in einer Tränkwanne erfolgt, durch die die Fasern geführt werden, und einem geschlossenen Verfahren, bei dem die Tränkung mit dem Harz erst in dem eigentlichen formgebenden Instrument unter Druck erfolgt. In der Regel weisen die Anlagen vor der Tränkung Vorrichtungen, wie z.B. Kadiergitter, auf, mittels derer die Fasern in eine zur späteren Formgebung nötige Verteilung gebracht werden und optional vorgelegte Rovings in einzelne Fasern aufgebrochen werden können. Es ist auch möglich alternativ oder ergänzend zu Rovings bzw. Fasern Vliese, Gewebe und/oder Gelege als Fasermaterial einzusetzen.

DE 29913877 U1 beschreibt einen steifen Stab aus extrudiertem, faserverstärktem Kunststoff, insbesondere für Halte- oder Stützstangen. Dabei wird ein Hohlkörper aus faserverstärktem Kunststoff mit einem inneren Stützkörper versehen. Die gewünschte Gewichtsreduzierung wird dadurch erzielt, dass als Stützkörper ein leichter, billiger Kunststoff, insbesondere ein Kunststoffschaum verwendet wirc Dieses Dokument offenbart auch ein Verfahren zur kontinuierlichen Herstellung von faserverstärkten, mit einem Schaumkern gefüllten Profilen, wobei das Verfahren folgende Verfahrensschritte aufweist: Einführen eines Schaumkerns, Umwickeln des Schaumkerns mit einem Fasermaterial, Imprägnieren des gewickelten Fasermaterials mit einem Harz und Trennen einzelner Profile mittels Schneiden oder Sägen.

US 2009/0127393 beschreibt ein Verfahren zur Herstellung eines, einen Hohlraum aufweisendes Profil (Stringers), indem ein Biegedorn eingeschäumt wird, anschließend ein Verbundwerkstoff und der Schaum mit dem eingeschäumten Biegedorn in ein Werkzeug in Form eines Stringers eingelegt und abschließend ausgehärtet wird.

In der internationalen Patentanmeldung WO 2013/174665 ist ein so genanntes Pul-Core-Verfahren zur Herstellung von Profilen mit einem Schaumkern und einer Composite-Ummantelung beschrieben. Ein solches Verfahren ist jedoch auf die Herstellung von gleichbleibenden, z.B. rohrförmigen Querschnitten beschränkt. Komplexere Formen, wie z.B. im einfachsten Fall Variationen des Querschnitts im Profilwerkstoff, können nach Stand der Technik nur mittels einem zeitaufwendigen Hand-Layup-Verfahren oder einem diskontinuierlichen RTM-Verfahren (Resin Transfer Molding) realisiert werden.

### Aufgabe

Die der vorliegenden Erfindung zugrundeliegende Aufgabe war es vor allem, ein neuartiges Verfahren zur Herstellung von faserverstärkten, mit einem Hartschaummaterial wie z.B. einem PMI-Schaum gefüllten Profilen, das auch für komplexe Formen oder Variationen des Querschnittes im Werkstücke geeignet ist, zur Verfügung zu stellen.

Insbesondere war es Aufgabe der vorliegenden Erfindung, ein Verfahren zur Verfügung zu stellen, mit dem komplexe Profile in Sandwichbauweise mit FKV-(Faser-Kunststoff-Verbund-) Außenhaut und Hartschaum-, wie P(M)I- (Poly(meth)acrylimid-) Schaumkernen in große Stückzahlen realisiert werden können.

Insbesondere bestand die Aufgabe, dass das Verfahren kontinuierlich durchführbar sein soll. Weiterhin war es Aufgabe der vorliegenden Erfindung, ein Verfahren zur Verfügung zu stellen, mittels dessen eine sehr gute Anbindung zwischen Schaumkern und äußeren Deckschichten ermöglicht wird. Weiterhin sollen mittels des erfinderischen Verfahrens auch bei der Schäumungstemperatur des PMI thermisch nicht belastbare Materialien als Deckmaterial verwendbar sein.

Darüber hinaus war es Aufgabe, dass das Verfahren schnell, in wenigen Schritten und kostengünstig durchzuführen ist.

Weitere Aufgaben können sich aus der Beschreibung, den Zeichnungen bzw. den Beispielen ergeben, ohne dass diese an dieser Stelle explizit genannt werden.

### Lösung

Gelöst werden die Aufgaben mittels eines neuartigen Verfahrens zur kontinuierlichen Herstellung von komplexen faserverstärkten, mit einem Hartschaumkern, insbesondere einem P(M)I-Schaumkern, bevorzugt einem PMI-Schaumkern gefüllte Profile. Bei diesem Verfahren handelt es sich in den ersten Verfahrensschritten um ein Umform- und Impregnierverfahren bei dem in der Mitte ein Schaumkern aus PMI zugeführt wird, und in den abschließenden Verfahrensschritten um einen eher dem RTM-Verfahren ähnlichen Prozess. Ein Schaumkern wird dabei mittels einem dem Pultrusionsverfahren analogen Verfahren mit einem Fasermaterial umwickelt, ohne dass dieses dabei jedoch bereits mit einem Harz getränkt ist. Die Tränkung mit dem Harz zur Bildung der Deckschicht aus dem Fasermaterial und dem Harz, bei dem es sich um einen Thermoplasten oder ein einen Duroplasten bildendes Reaktivharz handeln kann, erfolgt bevorzugt und in diesem Fall im Gegensatz zum bekannten Pultrusionsverfahren erst nach der Umwicklung des Schaumkerns. Zwar kann erfindungsgemäß die Tränkung des Fasermaterials mit dem Harz auch vor dem Umwickeln, z.B. mittels einer Führung der Fasern durch eine Harzwanne erfolgen, dieses Vorgehen hat jedoch gegenüber der bevorzugten Ausführungsform den Nachteil eines zusätzlichen Prozessschrittes.

Das erfindungsgemäße Verfahren zur kontinuierlichen Herstellung von faserverstärkten, mit einem Schaumkern gefüllten Profilen weist folgende Verfahrensschritte auf:
a) Einführen von Schaumkernen und Verbinden des neu eingeführten Schaumkerns mit dem Ende des zuletzt eingeführten Schaumkerns.
b) Umwickeln des Schaumkerns mit einem Fasermaterial,
c) Imprägnieren des gewickelten Fasermaterials mit einem Harz,
d) optionales Formen des umwickelten Schaumkerns in einem ersten Werkzeug,
e) Heizen und dabei optionales Aushärten des Harzes in einem zweiten Werkzeug,
f) Abkühlen des umwickelten Schaumkerns in einem dritten Werkzeug und
g) Trennen einzelner Profile mittels Schneiden oder Sägen und Entnahme des fertigen Werkstücks.

Dabei sind die Verfahrensschritte b) und c) nicht zwingend der angegebenen Reihenfolge durchzuführen. In einer alternativen Ausführungsform der Erfindung können die Fasern auch erst durch eine Imprägniervorrichtung, wie ein Imprägnierbad geführt und anschließend um den Schaumkern gewickelt werden.

Um das Verfahren kontinuierlich betreiben zu können, müssen dazu das zweite und dritte Werkzeug, bevorzugt auf Schlitten, in jeweils einander entgegengesetzter Richtung hin und her bewegt werden. Dabei erreichen beide Werkzeuge möglichst gleichzeitig den jeweiligen Wendepunkt, nach dessen Erreichen das Werkzeug in die jeweils entgegengesetzte Richtung bewegt wird.

An dem ersten Wendepunkt der beiden Werkzeuge sind diese dabei voneinander maximal weit entfernt. In dieser Stellung erfolgen bevorzugt gleichzeitig die Entnahme des fertigen Profils, bzw. - im Weiteren gleichbedeutend - Werkstücks aus dem dritten Werkzeug und die Aufnahme das mit dem Fasermaterial umwickelten Schaumkerns in das zweite Werkzeug. Dazu können beide Werkzeuge bereits auf dem letzten Wegstück vor dem Erreichen dieser Position geöffnet werden, bzw. das zweite Werkzeug, welches in dieser Phase leer ist, kann auch geöffnet vom anderen Wendepunkt in diese Position gefahren werden.

An dem zweiten Wendepunkt haben die beiden Werkzeuge die zueinander nächste Position erreicht. An dieser Stelle wird der aufgeheizte, in Verfahrensschritt d) geformte Abschnitt des Profils von dem zweiten Werkzeug in das dritte Werkzeug überführt. Dazu können beide Werkzeuge bereits auf dem letzten Wegstück vor dem Erreichen dieser Position geöffnet werden, bzw. das dritte Werkzeug, welches in dieser Phase leer ist, kann auch geöffnet vom anderen Wendepunkt in diese Position gefahren werden.

Zum Transport des Endlosprofils während des Verfahrens gibt es mehrere Möglichkeiten. So kann das Endlosprofil über Rollen oder Haken vor oder direkt hinter Verfahrensschritt b) geschoben werden. Es ist auch möglich, dass das Endlosprofil vor Verfahrensschritt g) mit entsprechenden Vorrichtungen gezogen wird. Bevorzugt erfolgt der Transport über das zweite und das dritte Werkzeug, genauer über das jeweilige Werkzeug, das gerade einen Abschnitt des Endlosprofils enthält. In dieser Variante wird jedoch ein zusätzlicher Transportmechanismus für die Überführung des Abschnitts des Endlosporfils aus Werkzeug zwei in Werkzeug drei unterstützend benötigt. Weiterhin ist eine Kombination der verschiedenen Varianten möglich.

Zu Verfahrensschritt a): Da der Schaumkern im Gegensatz zum Fasermaterial nicht auf Rollen mit mehreren hundert Metern Material vorgelegt werden kann, wird dieser bevorzugt in Form mehrerer, aneinander gereihter Einzelstücke kontinuierlich in die Anlage geführt. Dies kann händisch oder, insbesondere mit längennormierten Schaumstücken, automatisiert erfolgen. Diese Einzelstücke werden dann bevorzugt mittels Kleben, Stecken oder durch Hinzufügen eines Kupplungsstücks miteinander verbunden. Beim Stecken können die Schaumkerne dazu mit entsprechenden Nuten bzw. Aussparungen vorgefertigt sein. Beim Kleben ist es wichtig, dass der entsprechende Kleber schnell aushärtet. Das Auftragen des Klebers auf eine der Flächen kann dazu auch bei einem kontinuierlichen Betrieb händisch erfolgen. Kupplungsstücke wiederum können sich vorgefertigt jeweils an einem der beiden Enden der vorgelegten Schaumkernstücke befinden. Das zweite Schaumkernstück wird dann einfach in dieses Kupplungsstück gefahren. Alternativ kann es sich auch um zweiteilige Kupplungsstücke handeln, die sich komplementär an den beiden Enden des Schaumwerkstücks befinden und z.B. über einen einfach Clickmechanismus miteinander verbunden werden können.

Verfahrensschritt b): Die Wahl des geeigneten Fasermaterials, mit dem in Verfahrensschritt b) der Schaumkern umwickelt wird, stellt für den Fachmann kein Problem dar, da die verarbeitbaren Fasermaterialien aus der etablierten Pultrusionstechnologie bekannt sind. Bevorzugt handelt es sich bei dem Fasermaterial um Kohlefasern, Glasfasern, Polymerfasern, insbesondere Aramidfasern, oder Textilfasern, besonders bevorzugt um Aramid- oder Kohlefasern. Das Fasermaterial kann in Form einzelner Fasern, Rovings und/oder Vliese, Geweben und/oder Gelegen eingesetzt werden. Bevorzugt wird das Fasermaterial in Form von Endlosfasern oder-rovings eingesetzt.

Der Transport der Fasern erfolgt in der Regel durch ein Ziehen des Endlosprofils am Ende der Anlage z.B. durch einen Raupenabzug oder durch reversierende hydraulische Greifer. Bei der Formgebung ist es möglich, dass die Fasern in Verarbeitungsrichtung parallel zu einander ausgerichtet um den Schaumkern liegen. Bevorzugt jedoch bilden die Fasern um den Schaumkern eine Gewebestruktur. Durch diese Ausführung wird eine besondere mechanische Festigkeit des späteren Werkstücks erreicht.

Es gibt mehrere Varianten des Pultrusionsverfahren, von denen Aspekte einiger auf Verfahrensschritt b) des erfindungsgemäßen Verfahrens durch eine zusätzliche Schaumkernzuführung übertragbar sind.

Das Pul-winding-Verfahren ähnelt der grundsätzlichen Pultrusion. Jedoch werden bei diesem Prozess die Verstärkungsfasern durch rotierende Wickeleinrichtungen in unterschiedlichen Winkeln mit der Matrix überzogen und im Anschluss in einem formgebenden Werkzeug ausgehärtet. Durch diese Technologie kann man besonders hohe Belastungsanforderungen an Rohre, Stäbe bzw. andere Profilen erfüllen. Dieses Verfahren kann mit unterschiedlich rotierenden Winkeln ausgelegt werden. Die Winkelgrade sind in der Regel von 0° bis 85° einstellbar. Der Schaumkern wird dabei vom mit Harz getränkten Fasermaterial umgeben und mit diesem umwickelt.

Beim Pul-Braiding-Verfahren handelt es sich um eine Variante des Pul-winding-Verfahrens, bei dem es möglich ist, mehrere verschiedene Schichten Fasermaterial in einer Flechtstruktur, zu verarbeiten.

Beim Pul-preforming-Verfahren werden vorgefertigte Preforms aus Fasermaterial verwendet, um dem Profil die notwendigen Eigenschaften zu geben. Dies führt insbesondere zu multidirektional höheren Festigkeitswerten. Unter Preforms werden dabei definierte Gewebe, Gelege, Schläuche oder andere vorgefertigte Trockenpreforms verstanden, die im kontinuierlichen Prozess mittels Tauchtränkung bzw. Injektion mit dem Matrixmaterial verbunden werden. In dieser Variante des Verfahrens kann der Schaumkern bei der Herstellung der Preforms eingebracht werden. Die Tränkung mit dem Harz erfolgt entsprechend an dem, den Schaumkern enthaltenden, Preform. Durch die geschlossene Porenstruktur des PMI-Schaummaterials werden dabei nur an der Außenfläche vorhandene offene Poren mit dem Harz gefüllt.

In Verfahrensschritt c) erfolgt das Imprägnieren mit einem Harz. Als Harz, welches später das Matrixmaterial der Faser-Kunststoff-Verbundschale des Profils bildet, kann jedwedes für die Pultrusion geeignetes thermoplastisches Material bzw. nach Vernetzung zu einem Duroplasten umsetzbares Harz eingesetzt werden. Bevorzugt sind besagte, zu einem Duroplasten umsetzbare Harze. Insbesondere handelte s sich bei solchen um Polyester-, Vinylester-, Phenol-, PU- oder Epoxydharze, besonders bevorzugt um PU- oder Epoxydharze.

Verfahrensschritt d): Nach oder gleichzeitig zur Imprägnierung mit dem Harz kann in Verfahrensschritt d) eine Formgebung des Profils, z.B. durch kontinuierliches Thermoshaping, erfolgen. Diese Formgebung kann z.B. mittels einer oder mehrerer Werkzeugmuffen erfolgen. Insbesondere erfolgt die Formgebung in einem dem RTM-Verfahren analogen Presswerkzeug. Dazu kann für diesen Pressschritt der ansonsten kontinuierlich durchgeführte Transport des endlosen Schaumkerns, sowie die Umhüllung mit dem Fasermaterial kurzzeitig, während das Presswerkzeug geschlossen ist, gestoppt werden. Erfindungsgemäß ist das Schaumkernmaterial dabei von dem Fasermaterial vollständig umgeben. Weiterhin ist es bevorzugt, dass mit dem Presswerkzeug die Enden des gepressten Abschnitts des endlosen Schaumkernstücks mit harzgetränkter Faserumwicklung so zusammengepresst werden, dass eine vollständige oder fast vollständige Umschließung des Schaumkerns mit dem harzgetränkten Fasermaterial gebildet wird. Die Temperatur für die Formgebung hängt vor allem von dem eingesetzten Harzsystem ab. Für Epoxidharze liegt diese Temperatur beispielsweise bevorzugt zwischen 20 und 100 °C, besonders bevorzugt zwischen 50 und 80 °C.

Ein großer Vorteil dieser Formgebung ist, dass sie kontinuierlich erfolgen kann, und dass man so zunächst ein in Abschnitte unterteiltes Endlosprofil erhält. Dieses Endlosprofil wird am Ende der Anlage in Verfahrensschritt g) in einzelne Werkstücke mit gewünschter Länge vollautomatisch getrennt.

Verfahrensschritt e): Parallel zu Verfahrensschritt d) oder darauffolgend erfolgt in einem - wenn darauffolgend zweiten - Werkzeug ein Aufheizen des in den Verfahrensschritten a) bis b) bzw. c) gebildeten Rohprofils. Im Falle von duroplastisch aushärtenden Harzen erfolgen damit die Aushärtung des Deckmaterials und damit auch die Fixierung der gegebenen Form des Werkstücks. Die Aushärtung des Harzes, welches auch als Verstärkungsmaterial bezeichnet werden kann, erfolgt dabei in der Regel thermisch. Die dazu verwendete Temperatur im Formgebungswerkzeug hängt von dem jeweilig verwendeten Harz ab und ist für den Fachmann leicht ermittelbar. In der Regel liegen solche Temperaturen zwischen 100 und 300 °C. Um gleichmäßig ausgehärtete Werkstücke zu gewährleisten, ist dabei auf eine gleichmäßige Temperaturverteilung innerhalb des Werkzeuges zu achten.

Das zweite Werkzeug kann dabei zusätzlich zur verstärkenden oder zur zusätzlichen Formgebung - durch eine entsprechende Werkzeug Innenseitenformung - genutzt werden.

Wenn es sich bei dem Harz nicht um einen späteren Duroplasten, sondern um ein thermoplastisches Material handelt, ist es alternativ auch möglich, dass das Harz in Verfahrensschritt c) oberhalb der Schmelz- bzw. Glasübergangstemperatur auf die Fasern aufgetragen wird, und die "Aushärtung" erst in Verfahrensschritt f) unter Kühlung erfolgt.

Verfahrensschritt f): An das formgebende erste Werkzeug und das zweite Werkzeug zum Heizen schließt sich ein drittes Werkzeug zur Kühlung des fertigen Hohlprofils an. Idealerweise bildet auch die Innenseite dieses dritten Werkzeugs die Form des formgegebenen Abschnitts des Profils, der in dieses dritte Werkzeug eingelegt wird, ab. Im Falle von thermoplastischen Harzen erfolgt dabei auch die Härtung der Deckschicht. Zur Kühlung kann ein Luft, Wasser oder andere Kühlmittel enthaltener Werkzeugmantel vorliegen. Die Kühlung erfolgt in der Regel bei Temperaturen zwischen 0 und 120 °C, bevorzugt zwischen 10 und 50 °C und besonders bevorzugt zwischen 20 und 30 °C.

Verfahrensschritt g): Das Trennen der einzelnen Profile erfolgt mittels Schneiden oder Sägen. In einer bevorzugten Ausführungsform erfolgt dieses Trennen gleichzeitig zur Formgebung eines anderen Profilabschnitts in Verfahrensschritt d), wenn zur Formgebung der Transport des Endlosprofils kurzzeitig gestoppt ist. Nach dem Trennen erfolgen dann die Entnahme des fertigen Werkstücks beispielsweise mittels eines Roboterarms und die optionale Aufnahme in ein Lagersystem.

Die mittels des erfindungsgemäßen Verfahrens hergestellten Profilbauteile sind in Sandwichbauweise mit Schaumkernen ausgelegt. Ein großer Vorteil des erfindungsgemäßen, neuen Verfahrens ist, dass dieses in einem kontinuierlichen Prozess durch zwei aufeinander abgestimmte Pressen - dem ersten und dem zweiten Werkzeug - durchgeführt werden kann. Dadurch können folgende Vorteile genutzt werden:
- Kontinuierliche Herstellung komplexer Geometrien mit Hinterschnitten und Querschnittsänderungen
- Formgeben und Leiten in einem Schritt
- Keine Handlingsprobleme mit den Preformfasern
- In dem ersten Werkzeug kann das Matrixmaterial geschmolzen oder angeliert werden. Dadurch können noch kürzere Prozesszeiten realisiert werden.
- Die Werkzeuge sind temperierbar, dadurch können sowohl duroplastische als auch thermoplastische Matrixes verarbeitet werden.
- Ein bzw. zwei Werkzeuge sind heizbar, ein Werkzeug ist kühlbar. Dadurch sind enge Fertigungstoleranzen, schnelle Aushärtezeiten und kurze Zykluszeiten erreichbar.
- Das Profil kann durch die beiden Pressen abgezogen und unter Spannung gehalten werden. Dadurch sind optimale Faserorientierungen erreichbar.
- Kurze Zykluszeiten, dadurch Erreichung von hohen Stückzahlen und eine Großserientauglichkeit
- Optionale Verbindung der einzelnen umgeformten Kernwerkstoffen durch Kupplungsverbindungen

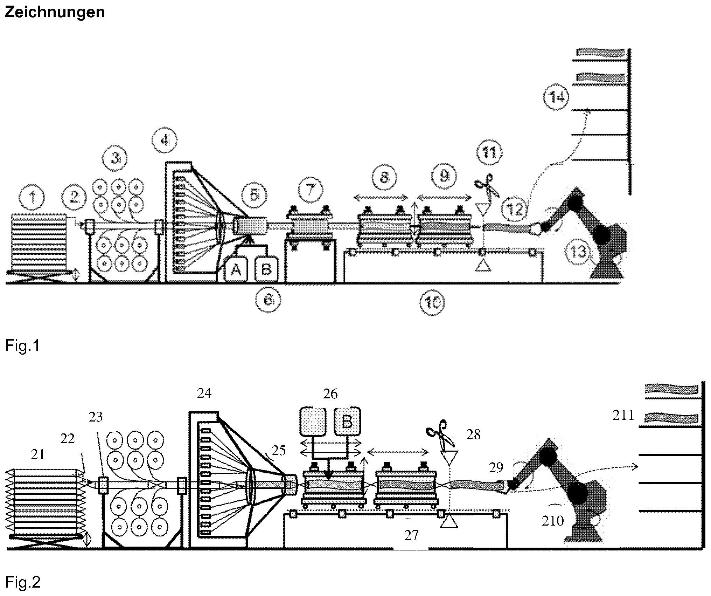

Insbesondere gibt es für die vorliegende Erfindung zwei besonders bevorzugte Ausführungsformen:
Bei der ersten bevorzugten Ausführungsform des Verfahrens handelt es sich um eine als Pul-Press-Verfahren zu bezeichnete Variante. Bei dieser Ausführungsform, die schematisch in Fig.1 dargestellt ist, erfolgen die Verfahrensschritte a) bis g) in voneinander getrennten Werkzeugen bzw. Vorrichtungen. Diese Ausführungsform ist mit eher geringem Umbau in bestehenden Pulltrusionsanlagen realisierbar und insbesondere für geformte, jedoch in Transportrichtung eher gerade Werkstücke geeignet.

Bei der zweiten bevorzugten Ausführungsform des Verfahrens handelt es sich um eine als Pul-Shape-Verfahren zu bezeichnete Variante. Im Pul-Press-Verfahren können nicht beliebige bzw. sehr hohe Komplexitätsgrade der Profile verarbeitet werden. Daher stellt, dass Pul-Shape-Verfahren eine Erweiterung dar. Bei diesem Pul-Shape-Verfahren handelt es sich bei dem ersten und dem zweiten Werkzeug um das gleiche Werkzeug. Weiterhin werden die Verfahrensschritte c), d) und e) gleichzeitig in diesem Universalwerkzeug durchgeführt. Dies bedeutet, dass es sich bei diesem Werkzeug um eine auf Schlitten bewegte Vorrichtung, die beheizbar ist und in die das Harz eingeleitet wird, handelt. In diesem Formgebungswerkzeug erfolgen somit simultan zueinander die endgültige Formgebung, das Aushärten des Harzes, eine Kalibrierung und der Transport. Mit der Kalibrierung ist damit ein eher kurzes Tempern der Harzzusammensetzung gemeint.

Folgende Vorteile können mit dem Pul-Shape-Verfahren zusätzlich erzielt werden:
- Schlanker Prozess mit wenigen Schritten und entsprechenden Kostenvorteilen
- Harz-Injektion in das erste beheizbare Werkzeug bei gleichzeitiger endgültiger Formgebung
- Injektion in ein geschlossenes System und dadurch gut zu erzielendes Faser-Matrix-Verhältnis
- Realisierung höherer Umformgrade durch entsprechend vorgeformte trockene Halbzeug
- Geringer Materialverschnitt

Sowohl das Pul-Shape-Verfahren, als auch das Pul-Press-Verfahren lassen sich dabei mit Verfahrensaspekten der zuvor erwähnten Pul-preforming-, Pul-Winding- oder Pul-Braiding-Verfahren kombinieren.

Mit diesem neuartigen Verfahren- unabhängig von der Ausführungsform - können verschiedenartige Profile hergestellt werden. Die Profile können eine oder mehrere Kammern aufweisen. Profile mit einer Kammer können z.B. als Rundrohr oder auch als Kammerprofil in rechteckiger oder quadratischer Form vorliegen. Auch ist es möglich, Profile mit komplexer Form, d.h. zwei oder mehreren verschieden geformten oder unterschiedlich großen Kammern, herzustellen. Rundrohre können beispielsweise neben einer einfachen runden Form, mit rundem Schaumkern und rundem Mantel, z.B. auch einen runden Schaumkern und einen eckigen Mantel, bzw. einen eckigen Schaumkern und einen runden Mantel, aufweisen. Unabhängig von der Form und der Anzahl Kammern kann das Endlosprofil mit unterschiedlichen Wandstärken bzw. Schaumkerngrößen hergestellt werden.

Erfindungsgemäß ist es insbesondere möglich, insbesondere mittels des beschriebenen Pul-Shape-Verfahrens, gebogene oder auch in Transportrichtung ungleichmäßig geformte Werkstücke bzw. Profile zu realisieren.

Das für den Schaumkern verwendete Material ist bevorzugt Poly(meth)acrylimid, im Text kurz als P(M)I bezeichnet. Die Formulierung (Meth)acryl- steht dabei für Methacryl-, Acryl- oder für Mischungen aus beiden. Besonders bevorzugt sind PMI-Schäume. Solche PMI-Schäume werden normalerweise in einem zweistufigen Verfahren hergestellt: a) Herstellung eines Gusspolymerisats und b) Aufschäumen dieses Gusspolymerisats. Alternativ können aber auch Schaumkerne aus anderen Hartschaummaterialien, wie insbesondere PET-, PVC-, PU- oder PP-Schäume eingesetzt werden. PMI-Schäume haben dabei jedoch den großen Vorteil, dass diese im ersten und/bzw. zweiten Werkzeug nachschäumen und dadurch zu einer besonders guten Grenzhaftung zwischen Schaumkern und den Deckschichten führt.

Die als Kernmaterial für das Verfahren benötigten Schaumteile können entweder durch eine Herstellung mittels eines In-mold-Foamings hergestellt werden, oder aber bevorzugt aus aufgeschäumten Schaumplatten, welche als Gusspolymerisate hergestellt werden können, herausgeschnitten, gesägt oder gefräst werden. Dabei können bevorzugt mehrere Schaumteile aus einer Platte geschnitten werden. In einer besonderen Alternative kann auch der Verschnitt aus der Herstellung größerer PMI-Schaumteile, wie sie z.B. im Flugzeugbau oder bei der Herstellung von Windkraftwerken verwendet werden, optional nachgeschnitten werden und zum Einsatz kommen.

Zur Herstellung des Gusspolymerisats werden zunächst Monomergemische, welche (Meth)acrylsäure und (Meth)acrylnitril, vorzugsweise in einem Molverhältnis zwischen 2:3 und 3:2, als Hauptbestandteile enthalten, hergestellt. Zusätzlich können weitere Comonomeren verwendet werden, wie z.B. Ester der Acryl- oder Methacrylsäure, Styrol, Maleinsäure oder Itaconsäure bzw. deren Anhydride oder Vinylpyrrolidon. Dabei sollte der Anteil der Comonomeren jedoch nicht mehr als 30 Gew% betragen. Geringe Mengen von vernetzenden Monomeren, wie z.B. Allylacrylat, können auch verwendet werden. Die Mengen sollten jedoch vorzugsweise höchstens 0,05 Gew.-% bis 2,0 Gew.-% betragen.

Das Gemisch für die Copolymerisation enthält ferner Treibmittel, die sich bei Temperaturen von etwa 150 bis 250 °C entweder zersetzen oder verdampfen und dabei eine Gasphase bilden. Die Polymerisation erfolgt unterhalb dieser Temperatur, so dass das Gusspolymerisat ein latentes Treibmittel enthält. Die Polymerisation findet zweckmäßig in Blockform zwischen zwei Glasplatten statt.

In einem zweiten Schritt erfolgt dann bei entsprechender Temperatur das Aufschäumen des Gusspolymerisats. Die Herstellung solcher PMI-Schäume ist dem Fachmann grundsätzlich bekannt und kann beispielsweise in EP 1 444 293, EP 1 678 244 oder WO 2011/138060 nachgelesen werden.

Als Material für den Schaumkern werden besonders bevorzugt PMI-Schäume in einem Dichtebereich von 30 bis 200 kg/m³ eingesetzt. Als PMI-Schäume seien insbesondere ROHACELL®-Typen der Firma Evonik Industries AG genannt.

Gesägte, geschnittene oder gefräste Schaumkernstücke haben dabei den Vorteil gegenüber mittels In-mold-Foaming hergestellten, dass diese an der Oberfläche offene Poren aufweisen. Beim Inkontaktbringen mit den Fasern und der anschließenden Imprägnierung mit dem Harz dringt ein Teil des Harzes in diese offenen Poren an der Schaumkernoberfläche ein. Dies hat den Vorteil, dass nach Aushärtung eine besonders starke Haftung an der Grenzfläche zwischen Schaumkern und Mantelmaterial erhalten wird.

Wie bereits ausgeführt können mittels dem erfindungsgemäßen Verfahren auch andere Hartschaumstoffe verarbeitet werden. Dabei kann es sich insbesondere um harte PET-, PVC-, PP- oder PU-Schäume handeln.

PVC-Hartschäume werden zumeist als Sandwichmaterial im Bootsbau, Rotorblättern oder Kraftfahrzeugen im Verbund mit Deckschichten eingesetzt. PVC-Schaum ist im Dichtebereich von 25 bis 300 kg/m³ kommerziell verfügbar und wird in großem Umfang eingesetzt. PVC-Schäume weisen eine besonders hohe Hochtemperaturbeständigkeit, jedoch nur limitierte mechanische Belastbarkeiten auf.

PP-Schäume sind vor allem als Isolationsmaterial, in Transportbehältern und als Sandwichmaterial bekannt. PP-Schäume können Füllstoffe enthalten und sind zumeist in einem Dichtebereich zwischen 20 bis 200 kg/m³ kommerziell verfügbar. Zur besseren Anhaftung können insbesondere die Oberflächen eines PP-Schaums vor Verfahrensschritt a) mit einer Klebschicht oder einem Haftvermittler versehen werden.

PU-Hartschäume wiederum zeichnen sich gegenüber PU-Weichschäumen durch eine geschlossenere Porenstruktur und einen höheren Vernetzungsgrad aus. PU-Hartschäume können zusätzlich größere Mengen anorganischer Füllmaterialien enthalten.

Ein solches, mit einem Hartschaum, wie einem PMI-Schaum gefülltes Profil zeichnet sich insbesondere dadurch aus, dass es sich bei dem Deckmaterial um mit einem Fasermaterial verstärkten Duroplasten und bei dem Schaumkern um einen PMI-Schaum handelt, und dass das PMI-Schaum gefüllte Profil keine Klebeschicht und keine Fügestellen aufweist. Weiterhin ist der Schaumkern vollständig oder mit nur sehr kleinen Lücken mit dem Deckmaterial umschlossen ist. Sehr kleine Lücken bedeutet dabei, dass bei der Formgebung in dem Presswerkzeug, bei dem die Enden des Abschnitts, wie zuvor beschrieben, zusammengepresst werden, kleine Bereiche das Schaumkerns weiterhin sichtbar sein können. Insbesondere bevorzugt erfolgt das Pressen jedoch dergestalt, dass an dem fertigen Profil überhaupt kein Schaumkern von außen mehr zu erkennen ist.

Gleichsam weist der Hartschaumkern an der Grenzfläche zwischen Hartschaumkern und dem Deckmaterial offene, mit Matrixmaterial gefüllte Poren auf.

Ein solches Profil mit einem Hartschaumkern hat große Vorteile gegenüber dem Stand der Technik. Das Fehlen von Fügestellen trägt zu einer gleichmäßigen mechanischen Belastbarkeit und einer gesteigerten Gesamtstabilität des Profils bei. Das Fehlen von Klebeschichten trägt zu Gewichtseinsparungen und einer deutlich vereinfachten Herstellbarkeit, bei mindestens vergleichbarer mechanischer Belastbarkeit, bei.

Die Werkstücke haben darüber hinaus sehr gute mechanische Eigenschaften, insbesondere in Bezug auf sehr gute Beul-, Knick- und Drucksteifigkeiten. Sie zeigen auch besonders hohe Druckfestigkeiten und eine erhöhte Energieaufnahme bei einer Schlagbelastung, so dass sie bei einer Verwendung im Automobilbau z.B. in einem Crashfall zu einer Verbesserung der Karosseriestabilität beitragen. Darüber hinaus können sie im Vergleich zu Metallteilen, insbesondere gegenüber nicht gefüllten Hohlkörpern, in einer Karosserie zu einer besseren Akustik, d.h. zu einer geringeren Geräuschentwicklung durch das Fahrgestell bei.

In einer besonderen Ausführungsform kann der Hartschaum ein weiteres Material aus Metall oder einem anderen Kunststoff eingebettet in dem Schaummaterial enthalten. Dieses kann beispielsweise in Form eines Rohres vorliegen. Ein solches Rohr kann beispielsweise bei der Verwendung im Karosseriebau als Kabelleitung fungieren.

Ergänzend oder unabhängig davon kann der Hartschaum Inserts, insbesondere metallische Inserts aufweisen. Solche Inserts dienen später als Anbindungsstellen für das Bauteil bei der Verwendung z.B. im Automobil- oder Flugzeugbau. Dabei kann als Insert z.B. ein Metallblock eingebracht werden, in den dann anschließend ein Gewinde, welches später dann verschraubt werden kann, eingefräst wird.

Die Profile mit einem Schaumkern, insbesondere mit einem PMI-Schaumkern bzw. die nach dem erfindungsgemäßen Verfahren hergestellten, einen Schaumkern aufweisenden Formkörper können vielfältig Anwendung finden. Dabei ist ein Hauptaugenmerk, ohne dass diese Beschreibung in irgendeiner Form einschränkend zu verstehen ist, auf den Leichtbau gerichtet. Dies betrifft insbesondere den Automobil-, Nutzfahrzeugs-, Schiffs-, Flugzeug-, Hubschrauberbau, die Konstruktion von Anlagen zur Windenergiegewinnung, die Robotertechnik und die Raumfahrt. Im Automobilbau sei insbesondere die Konstruktion von Dachriegeln oder Bodenverstrebungen beispielhaft genannt. In Flugzeugen sei beispielhaft die Verwendung als Kabinenbodenabstützung aufgeführt. Bei einem solchen Einsatz stellen die Profile eine mechanisch nahezu gleichwertige, dabei jedoch deutlich leichtere Alternative zu Aluminium oder Stahl dar.

### Beispiele

Kontinuierlich Herstellung eines komplexen Faserverbundprofils mit einem PMI-Hartschaumkern:
Schaumkerne ROHACELL® IG-F 51 werden in länglichen Rechteckformaten zugeschnitten und anschließend kontinuierlich durch eine Führung in die Anlage eingeführt. Diese werden in einem nächsten Schritt mit trocknen und vorgetränkten Fasern, sowohl unidirektional 90 Fasern je 1600 tex (Toho Tenax T1600), als auch mit 48 Fasern je 800 tex (Toho Thenax T800) ummantelt. Im Performwerkzeug werden alle Materialien konsolidiert und mit einem Vinylesterharz endgültig getränkt. Das nun unausgehärtet Faserverbundmaterial (Pultrudat) wird darauf kontinuierliche in eine verfahrbare und heizbare Presse (Presse Nummer 1) durch eine Kühlpresse (Presse Nummer 2) eingezogen. Hier findet nun die Formgebung und Aushärtung statt. Durch eine für diese Materialien geeignete Temperatur von 120 °C, wird die Aushärtezeit kurz gehalten. Sobald das Profil ausgehärtet ist, erreicht die Presse Nummer 1 ihre Endposition. Hier übernimmt die Kühlpress das komplexe Profil und zieht dabei das Pultrudat weiter aus. Währenddessen kann die geöffnete Presse Nummer 1 wieder an ihre Anfangsposition fahren und der Zyklus beginnt von vorne.

### Index zu den Zeichnungen

Fig.1 stellt beispielhaft den schematischen Aufbau einer für das erfindungsgemäße Pul-Press-Verfahren geeignete Anlage dar. Folgend der Index zur Fig.1:
   (1) Schaumkern (Vorlage)
   (2) Schaumkern (Einfügen in Anlage und Verbinden mit Ende des letzten Schaumkerns)
   (3) Faserzuführung, unidirektional
   (4) Wickel-, Flechtvorrichtung
   (5) Harzimpregnation
   (6) Harzreservoir (hier 2K-System mit Komponenten A und B)
   (7) Werkzeug für Preforming
   (8) Heizwerkzeug in Schlittenform
   (9) Kühlwerkzeug in Schlittenform
   (10) Schiebesystem mit Antrieb für Werkzeuge (8) und (9)
   (11) Schneidevorrichtung
   (12) Fertiges Profil
   (13) Handlingsystem Für Profil (12)
   (14) Lagersystem
Fig.2 stellt beispielhaft den schematischen Aufbau einer für das erfindungsgemäße Pul-Shape-Verfahren geeignete Anlage dar. Folgend der Index zur Fig.2:
   (21) (Thermo)geformter Schaumkern (Vorlage)
   (22) Kupplungsstück (diese Variante kann auch in der Ausführungsform gemäß Fig.1 zum Einsatz kommen)
   (23) Schaumkern-Führung (analog (2) in Fig.1))
   (24) Faserzuführung, unidirektional, sowie Wickel-, Flechtvorrichtung (analog Fig.1, (3), (4)) (25) Führung trockenes Halbzeug
   (26) Werkzeug mit Harzinfiltration, optionaler weiterer Formgebung, Heizen und angeschlossenen Harzreservoirs (hier 2K-System mit Komponenten A und B), dieses Werkzeug übernimmt die Funktionen der Werkzeuge (5), (7) und (8) in der Ausführungsform gemäß Fig.1
   (27) Kühlwerkzeug in Schlittenform
   (28) Schneidevorrichtung
   (29) Fertiges Profil
   (210) Handlingsystem Für Profil (29)
   (211) Lagersystem

Zu den Zeichnungen sei angemerkt, dass diese nur schematisch die jeweiligen Ausführungsformen darstellen. So ist die Schiene, auf denen das zweite und das dritte Werkzeug bewegt werden, naturgemäß deutlich länger, um eine ausreichende Transportstrecke und damit ein ausrechend langes Heizen bzw. Kühlen zu realisieren. Die genaue Länge ergibt sich dem Fachmann insbesondere aus der Betriebsgeschwindigkeit, der Deckschichtdicke und den Eigenschaften des eingesetzten Harzes.

## Patentansprüche

1. Verfahren zur kontinuierlichen Herstellung von faserverstärkten, mit einem Schaumkern (1, 2) gefüllten Profilen (12), wobei das Verfahren folgende Verfahrensschritte aufweist:
a) Einführen von Schaumkernen (1, 2) und Verbinden des neu eingeführten Schaumkerns mit dem Ende des zuletzt eingeführten Schaumkerns (1, 2),
b) Umwickeln des Schaumkerns (1, 2) mit einem Fasermaterial,
c) Imprägnieren des gewickelten Fasermaterials mit einem Harz,
d) optionales Formen des umwickelten Schaumkerns in einem ersten Werkzeug (7),
e) Heizen und dabei optionales Aushärten des Harzes in einem zweiten Werkzeug (8),
f) Abkühlen des umwickelten Schaumkerns in einem dritten Werkzeug (9) und
g) Trennen einzelner Profile (12) mittels Schneiden oder Sägen und Entnahme des fertigen Werkstücks,
**dadurch gekennzeichnet, dass** das zweite und dritte Werkzeug auf Schlitten in jeweils einander entgegengesetzter Richtung bewegt werden.

2. Verfahren gemäß Anspruch 1, **dadurch gekennzeichnet, dass** der Schaumkern in Form mehrerer, aneinander gereihter Einzelstücke kontinuierlich in die Pultrusionsanlage geführt wird und diese Einzelstücke mittels Kleben, Stecken oder durch Hinzufügen eines Kupplungsstücks miteinander verbunden werden.

3. Verfahren gemäß Anspruch 1 oder 2, **dadurch gekennzeichnet, dass** es sich bei dem Fasermaterial um Kohlefasern, Glasfasern, Polymerfasern, insbesondere Aramidfasern, oder Textilfasern, bevorzugt um Aramid- oder Kohlefasern handelt.

4. Verfahren gemäß mindestens einem der Ansprüche 1 bis 3, **dadurch gekennzeichnet, dass** es sich bei dem Harz um einen Duroplasten, insbesondere um ein Material, das aus einem Polyester-, Vinylester-, Phenol-, PU- oder Epoxydharz, bevorzugt aus einem PU- oder einem Epoxydharz gebildet wurde, handelt.

5. Verfahren gemäß mindestens einem der Ansprüche 1 bis 4, **dadurch gekennzeichnet, dass** das Fasermaterial in Form einzelner Fasern, Rovings und/oder Vliese, Geweben und/oder Gelegen eingesetzt wird.

6. Verfahren gemäß mindestens einem der Ansprüche 1 bis 5, **dadurch gekennzeichnet, dass** es sich bei dem Schaumkern um einen Kern aus Poly(meth)acrylimid handelt.

7. Verfahren gemäß Anspruch 6, **dadurch gekennzeichnet, dass** als Material für den Schaumkern Polymethacrylimid in einem Dichtebereich von 30 bis 200 kg/m³ verwendet werden.

8. Verfahren gemäß mindestens einem der Ansprüche 1 bis 7, **dadurch gekennzeichnet, dass** Verfahrensschritt b) analog einem Pultrusionsverfahren mit Schaumkernzuführung in Form eines modifizierten Pul-preforming-, Pul-Winding- oder Pul-Braiding-Verfahrens erfolgt.

9. Verfahren gemäß mindestens einem der Ansprüche 1 bis 8, **dadurch gekennzeichnet, dass** das Verfahren als Pul-Press-Verfahren durchgeführt wird, bei dem die Verfahrensschritte a) bis g) in voneinander getrennten Werkzeugen bzw. Vorrichtungen erfolgen.

10. Verfahren gemäß mindestens einem der Ansprüche 1 bis 8, **dadurch gekennzeichnet, dass** das Verfahren als Pul-Shape-Verfahren durchgeführt wird, bei dem es sich bei dem ersten und dem zweiten Werkzeug um das gleiche Werkzeug handelt, in dem die Verfahrensschritte c), d) und e) gleichzeitig durchgeführt werden.

## Claims

1. Process for the continuous production of fibre-reinforced profiles (12) comprising a foam core (1, 2), wherein the process has the following steps:
a) introduction of foam cores (1, 2) and connecting of the newly introduced foam core to the end of the most recently introduced foam core (1, 2),
b) wrapping a fibre material around the foam core (1, 2),
c) impregnation of the fibre-material wrap with a resin,
d) optional moulding of the wrapped foam core in a first mould (7),
e) heating and thereby optional hardening of the resin in a second mould (8),
f) cooling of the wrapped foam core in a third mould (9) and
g) separation of individual profiles (12) by means of cutting or sawing and removal of the finished workpiece,
**characterized in that** the second and third mould are moved in respectively mutually opposite direction on carriages.

2. Process according to Claim 1, **characterized in that** the foam core takes the form of a plurality of successive individual pieces when it is continuously passed into the pultrusion plant, and the said individual pieces are connected to one another by means of adhesion bonding or insertion or through addition of a coupling piece.

3. Process according to Claim 1 or 2, **characterized in that** the fibre material is carbon fibres, glass fibres, polymer fibres, in particular aramid fibres, or textile fibres, preferably aramid fibres or carbon fibres.

4. Process according to at least one of Claims 1 to 3, **characterized in that** the resin is a thermoset, in particular a material formed from a polyester resin, from a vinyl ester resin, from a phenolic resin, from a PU resin or from an epoxy resin, preferably from a PU resin or from an epoxy resin.

5. Process according to at least one of Claims 1 to 4, **characterized in that** the fibre material is used in the form of individual fibres or rovings and/or nonwovens, woven fabrics and/or laid scrims.

6. Process according to at least one of Claims 1 to 5, **characterized in that** the foam core is a core made of poly(meth)acrylimide.

7. Process according to Claim 6, **characterized in that** polymethacrylimide in a density range from 30 to 200 kg/m³ is used as material for the foam core.

8. Process according to at least one of Claims 1 to 7, **characterized in that** step b) takes place by analogy with a pultrusion process with foam core introduction in the form of a modified pul-preforming, pul-winding or pul-braiding process.

9. Process according to at least one of Claims 1 to 8, **characterized in that** the process is conducted as pul-press process in which the steps a) to g) take place in moulds or, respectively, devices that are separate from one another.

10. Process according to at least one of Claims 1 to 8, **characterized in that** the process is carried out as pul-shape process in which the first and the second mould are the same mould, in which the steps c), d) and e) are carried out simultaneously.

## Revendications

1. Procédé pour la préparation de manière continue de profilés (12) renforcés par des fibres, remplis avec un noyau de mousse (1, 2), le procédé présentant les étapes de procédé suivantes :
a) introduction de noyaux de mousse (1, 2) et connexion du noyau de mousse nouvellement introduit avec l'extrémité du noyau de mousse (1, 2) introduit en dernier,
b) enveloppement du noyau de mousse (1, 2) avec un matériau fibreux,
c) imprégnation du matériau fibreux enroulé avec une résine,
d) mise en forme éventuelle du noyau de mousse enveloppé dans un premier outil (7),
e) chauffage et par là même durcissement éventuel de la résine dans un deuxième outil (8),
f) refroidissement du noyau de mousse enveloppé dans un troisième outil (9) et
g) séparation de profilés individuels (12) au moyen d'une découpe ou d'un sciage et retrait de la pièce finie,
**caractérisé en ce que** le deuxième et le troisième outil sont déplacés sur des chariots dans une direction à chaque fois mutuellement opposée.

2. Procédé selon la revendication 1, **caractérisé en ce que** le noyau de mousse est conduit de manière continue dans l'installation de pultrusion sous forme de plusieurs pièces uniques alignées et ces pièces uniques sont reliées les unes aux autres par collage, insertion ou par ajout d'une pièce de couplage.

3. Procédé selon la revendication 1 ou 2, **caractérisé en ce que** le matériau fibreux est des fibres de carbone, des fibres de verre, des fibres de polymère, en particulier des fibres d'aramide, ou des fibres textiles, préférablement des fibres d'aramide ou des fibres de carbone.

4. Procédé selon au moins l'une des revendications 1 à 3, **caractérisé en ce que** la résine est un duroplaste, en particulier un matériau qui a été formé à partir d'une résine de polyester, d'une résine d'ester de vinyle, d'une résine phénolique, d'une résine de PU ou d'une résine époxy, préférablement à partir d'une résine de PU ou d'une résine époxy.

5. Procédé selon au moins l'une des revendications 1 à 4, **caractérisé en ce que** le matériau fibreux est utilisé sous forme de fibres, de mèches et/ou de non-tissés individuel(le)s, de tissus et/ou de nappes.

6. Procédé selon au moins l'une des revendications 1 à 5, **caractérisé en ce que** le noyau de mousse est un noyau de poly(méth)acrylimide.

7. Procédé selon la revendication 6, **caractérisé en ce qu'**un polyméthacrylimide dans une plage de densité de 30 à 200 kg/m³ est utilisé comme matériau pour le noyau de mousse.

8. Procédé selon au moins l'une des revendications 1 à 7, **caractérisé en ce que** l'étape de procédé b) est réalisée de manière analogue à un procédé de pultrusion avec une introduction de noyau de mousse sous forme d'un procédé de pul-préformage, de pul-bobinage ou de pul-tressage modifié.

9. Procédé selon au moins l'une des revendications 1 à 8, **caractérisé en ce que** le procédé est mis en œuvre comme procédé de pul-pressage, dans lequel les étapes de procédé a) à g) sont réalisées dans des outils ou des dispositifs séparés les uns des autres.

10. Procédé selon au moins l'une des revendications 1 à 8, **caractérisé en ce que** le procédé est mis en œuvre comme procédé de pul-forme, dans lequel le premier et le deuxième outil sont des outils identiques, dans lequel les étapes de procédé c), d) et e) sont mises en œuvre simultanément.
